# FASCICULE DE BREVET EUROPEEN

(11) **EP 0 518 718 B1**
(45) Date de publication et mention de la délivrance du brevet: **31.07.1996**
(21) Numéro de dépôt: 92401440.0
(22) Date de dépôt: 26.05.1992
(51) Int. Cl.: C09K 11/02

(54) **Composition fluide luminescente polymérisable et son application**
Polymerisierbare, lumineszente Flüssigzusammensetzung und ihre Anwendung
Luminescent polymerisable fluid composition and its application

(30) Priorité: 14.06.1991 FR 9107312
(43) Date de publication de la demande: 16.12.1992
(73) Titulaire: SOCIETE FRANCAISE HOECHST, 92800 Puteaux (FR)
(72) Inventeur: Eranian, Armand, F-92310 Sevres (FR); Jacquinot, Eric, F-60350 Attichy (FR)
(74) Mandataire: Rinuy, Santarelli

(56) Documents cités:
- EP-A- 0 333 162
- FR-A- 2 566 791

## Description

La présente invention concerne une composition fluide luminescente polymérisable et son application.

Afin d'améliorer la sécurité des personnes, on utilise de plus en plus de panneaux luminescents et l'on en recherche actuellement qui présentent une densité en pigments luminescents par unité de surface la plus élevée possible de manière à obtenir une longue durée d'éclairement.

Par ailleurs, étant donné que la plupart des pigments luminescents minéraux sont sensibles à l'action combinée de l'humidité et des rayons ultraviolets, on tente de les protéger en les incorporant dans une résine transparente qui est fixée ensuite généralement sur un support solide (cf. Encyclopedia of Chemical Technology, KIRK-OTHMER, 3ème édition, volume 14, pages 559-562). Les pigments luminescents classiques sont des produits minéraux, généralement à base de sulfure de zinc dopé avec certains métaux, qui présentent une masse volumique élevée et lorsqu'ils sont mis en suspension dans une résine fluide, polymérisable, ils décantent très rapidement, ce qui conduit après polymérisation de la résine, à un produit solide à luminosité hétérogène et ce, d'autant plus que la quantité de pigment est plus importante. Par ailleurs, il est connu, par la demande de brevet européen N° 333.162, des compositions pâteuses contenant du phosphore et éventuellement de la silice en poudre dispersés dans un solvant organique contenant un polymère à base d'un méthacrylate d'alkyle et d'au moins 0,1 % en poids d'un monomère choisi parmi les acides carboxyliques éthylèniques et les (meth)acrylates d'hydroxyalkyle, éventuellement en mélange avec un autre monomère vinylique copolymérisable, mais lors de l'emploi de ces compositions pâteuses, il est nécessaire d'éliminer des quantités relativement importantes de solvant organique, ce qui est onéreux et très contraignant. Afin d'obvier à ces inconvénients, la demanderesse a découvert une composition fluide luminescente polymérisable, présentant une longue vie en pot et autorisant l'obtention de panneaux luminescents possédant une densité élevée et homogène de pigments luminescents par unité de volume.

La composition fluide luminescente polymérisable selon la présente invention est caractérisée par le fait qu'elle contient pondéralement (a) de 30 à 45 % d'un ou plusieurs pigments minéraux luminescents, (b) de 10 à 30 % de particules de silice, d'un diamètre compris entre 7 et 1000 nm, non liées entre elles par des liaisons siloxane, et (c) le complément à 100 % par de l'acrylate d'hydroxy-2 éthyle et/ou du méthacrylate d'hydroxy-2 éthyle.

On désigne par pigments minéraux luminescents, les pigments minéraux luminescents connus décrits notamment dans l'Encyclopedia of Chemical Technology, KIRK-OTHMER, 3ème édition, volume 17, pages 835-836, tels que le sulfure de zinc dopé avec du cuivre, du cobalt. Parmi les pigments minéraux, on retient notamment ceux vendus par la demanderesse sous la dénomination de LUMILUX^{R}.

L'invention a plus particulièrement pour objet les compositions telles que définies ci-dessus caractérisées en ce que les particules de silice non liées entre elles par des liaisons siloxane, possèdent un diamètre compris entre 7 et 100 nm. On retient également les particules de silice qui contiennent au moins un groupement silanol superficiel par nm² estérifié avec soit du méthacrylate d'hydroxy-2 éthyle, soit de l'acrylate d'hydroxy-2 éthyle.

Les particules de silice partiellement estérifiées en surface avec la fonction alcool du ou des (méth)acrylates d'hydroxy-2 éthyle, d'un diamètre compris entre 7 et 1000 nm et non liés entre elles par des ponts siloxane, sont également des produits connus et elles peuvent être préparées par un des procédés décrits par Ralph K.IDLER, The Chemistry of Silica, pages 412-414, John Wiley and Sons, New-York, 1979. elles sont généralement commercialisées par la demanderesse sous la dénomination HIGHLINK OG 100^{R} et HIGHLINK OG 101^{R}.

L'invention a plus particulièrement pour objet les compositions telles que définies ci-dessus caractérisées en ce que le constituant mentionné au point (c) est, soit un mélange de méthacrylate d'hydroxy-2 éthyle et d'acrylate d'hydroxy-2 éthyle, soit, de préférence le méthacrylate d'hydroxy-2 éthyle.

L'invention a tout particulièrement pour objet les compositions telles que définies ci-dessus caractérisées en ce qu'elles contiennent pondéralement de 30 à 45 % d'un ou plusieurs pigments minéraux luminescents, de 10 à 30 % exprimés en SiO₂ de particules de silice partiellement estérifiées en surface et le complément à 100 % par du méthacrylate d'hydroxy-2 éthyle seul ou en mélange avec de l'acrylate d'hydroxy-2 éthyle.

Parmi ces produits, on peut citer plus particulièrement une composition fluide luminescente polymérisable contenant pondéralement 40 % de sulfure de zinc dopé au cuivre et au cobalt, de 10 à 30 % de silice et le complément à 100 % par du méthacrylate d'hydroxy-2 éthyle.

Les compositions fluides selon la présente invention peuvent contenir également en outre des additifs habituels tels des promoteurs d'adhérence, des anti-oxydants, des agents dispersants et, éventuellement, des agents promoteurs de radicaux libres par décomposition thermique, tels que notamment des dérivés azoïques. Le poids total des additifs éventuellement introduits dans la composition selon la présente invention n'excède pas, de préférence, 3 % en poids du poids total de la composition.

Les compositions selon l'invention peuvent également contenir en outre, soit un ou plusieurs (méth)acrylates d'alkyle en C₁-C₄ tels que l'acrylate de méthyle, l'acrylate d'éthyle, l'acrylate de butyle, le méthacrylate de méthyle, le méthacrylate d'éthyle, le méthacrylate de butyle, soit un ou plusieurs (méth)acrylates d'hydroxyalkyle en C₃-C₅ tels que l'acrylate d'hydroxy-2 propyle, l'acrylate d'hydroxy-3 propyle, le méthacrylate d'hydroxy-2 propyle et le méthacrylate d'hydroxy-3 propyle, soit leurs mélanges en proportions variables. Le rapport pondéral entre le poids M de ces différents monomères et celui de l'acrylate d'hydroxy-2 éthyle et/ou du méthacrylate d'hydroxy-2 éthyle est de préférence compris entre 0 et 6.

L'examen cinétique de la photopolymérisation des compositions selon la présente invention a été réalisé par spectroscopie infrarouge résolue dans le temps. On constate qu'elle présente une grande réactivité, nettement supérieure à une composition identique exempte de silice colloïdale. Cette haute réactivité permet d'atteindre après polymérisation des taux de conversion élevés de sorte que le produit final présente un taux extrêmement faible de dérivés (méth)acryliques résiduels.

Les compositions selon la présente invention sont fluides même pour des concentrations élevées en silice et/ou en pigments luminescents.

Les compositions selon la présente invention sont destinées à être polymérisées. En raison de leur grande réactivité cette polymérisation peut être amorcée à une température relativement basse, inférieure à 60° C, et avec un faible taux d'amorceur de polymérisation. Bien évidemment, la température d'amorçage est fonction notamment, de la nature de l'agent amorceur utilisé. Avantageusement, l'amorceur de polymérisation choisi est un amorceur azoïque connu se décomposant thermiquement à la température souhaitée, habituellement aux environs de 50° C. Une fois la réaction de polymérisation initiée, soit par des amorceurs classiques tels ceux du type peroxyde, soit préférentiellement par des amorceurs connus du type azoïque, on laisse se développer la polymérisation, puis, si nécessaire, on la termine par un léger chauffage à une température inférieure à 70° C pendant 30 à 60 minutes. On obtient ainsi une masse solide ne présentant ni bulle ni craquelure et dans laquelle les pigments luminescents utilisés sont répartis uniformément. Lors de la préparation de masses solides luminescentes de forte épaisseur, on a souvent intérêt à utiliser une composition selon la présente invention, contenant pondéralement plus de monomères de la famille de l'acide méthacrylique que de la famille de l'acide acrylique. En effet, les monomères acryliques sont nettement plus réactifs que les monomères méthacryliques et, lors de la polymérisation, la réaction exothermique se développe parfois trop rapidement en donnant des surchauffes locales qui risquent d'endommager le support solide utilisé et/ou d'induire des délaminages.

Les compositions selon la présente invention sont obtenues par simple mélange de leurs divers constituants.

La présente invention a également pour objet l'application des compositions selon l'invention à l'obtention de masses solides luminescentes, par exemple des films, plaques ou blocs luminescents. Un des avantages des compositions selon la présente invention est leur fluidité qui leur permet d'être introduites dans des volumes de dimensions variées puis d'être polymérisées in-situ après addition, si nécessaire, d'un amorceur de polymérisation. Un autre avantage des compositions selon l'invention est leur vie en pot relativement longue ce qui permet de les utiliser quelque temps après leur préparation sans que l'on note une décantation appréciable des pigments minéraux.

Les viscosités Brookfield mentionnées dans les exemples ont été déterminées sur un viscomètre Rhéomat 115.

Les exemples suivants illustrent la présente invention sans toutefois la limiter.

### EXEMPLE 1

On mélange à la température ambiante, sous agitation, 20g de LUMILUX^{R}, Green Mix, référence 50085, commercialisé par la demanderesse avec 30g de HIGHLINK OG 100^{R}, également commercialisé par la demanderesse, contenant pondéralement environ 70 % de méthacrylate d'hydroxy-2 éthyle, 30 % de silice sous forme de particules de silice d'un diamètre moyen de 13 nm, non liées entre elles par des liaisons siloxane et moins de 1 % d'eau, et présentant un taux de greffage de 2,3 c'est-à-dire que le nombre de groupements Si-O-CH₂-CH₂-O-CO-C(CH₃) = CH₂ par nm² de surface de la particule de silice est de 2,3. Le taux de greffage est déterminé par la méthode décrite par E.C. Broge dans le brevet des Etats-Unis d'Amérique N° 2736668.

Un échantillon placé dans une éprouvette graduée de 50 ml ne laisse apparaître après 40 minutes de repos à la température ambiante qu'une phase supérieure de 2 cm de hauteur exempte de pigments. Cette faible décantation est étonnante étant donné la très faible viscosité de l'HIGHLINK OG 100^{R} (viscosité Brookfield à 20° C et à 780 tr/min : 44 mPa.s).

Dans cette composition, on introduit à la température ambiante 0,3 g de 2,2'-azobis(2,4-diméthylvaléronitrile), soit 0,6 % par rapport au poids total de la composition, puis on la verse dans un étroit intervalle de 1,5 mm entre deux plaques de verre maintenues par un joint plastique. L'ensemble est ensuite chauffé extérieurement à 50° C pendant 30 minutes. La réaction exothermique de polymérisation démarre, puis lorsque la température de l'ensemble revient de nouveau à 50° C, on maintient cette température par un chauffage extérieur. Après refroidissement à la température ambiante, on obtient un panneau luminescent solide, homogène, sans bulle ni craquelure, ni délaminage, constitué par des pigments luminescents emprisonnés dans une résine contenue entre deux plaques de verre.

### EXEMPLE 2

On mélange à la température ambiante, sous agitation, 67 g de LUMILUX^{R}, Green Mix, référence 50085, avec 80 g de HIGHLINK OG 100^{R} et 20 g de HIGHLINK OG 101^{R}, commercialisés par la demanderesse. On obtient ainsi 167 g de composition selon la présente invention. L'HIGHLINK OG 101^{R} contient pondéralement 70 % d'acrylate d'hydroxy-2 éthyle, 30 % de silice sous forme de particules de silice d'un diamètre moyen de 13 nm, non liées entre elles par des liaisons siloxane et moins de 1 % d'eau, et présente une viscosité Brookfield déterminée à 20° C à la vitesse de 780 tr/min de 40 mPa.s et un taux de greffage de 2,4.

Dans la composition précédente, on introduit ensuite 0,6 g (0,36 % en poids) de 2,2'-azobis(2,4-diméthylvaléronitrile) puis elle est versée dans un intervalle de 2 mm entre deux plaques de verre maintenues par un joint plastique. L'ensemble est ensuite maintenu pendant 45 minutes à 50° C puis il est refroidi à la température ambiante. On obtient ainsi un panneau luminescent sans bulle, ni craquelure, ni délaminage, présentant une densité homogène de pigments luminescents.

### EXEMPLE 3

On mélange à la température ambiante, sous agitation, 43,6 g de LUMILUX^{R}, Green Mix, référence 50085 avec 40 g de méthacrylate de n-butyle et 25 g de HIGHLINK OG 101/61^{R} contenant pondéralement 40 % d'acrylate d'hydroxy-2 éthyle et 60 % de silice sous forme de particules de silice d'un diamètre moyen de 13 nm, non liées entre elles par des liaisons siloxane et présentant une viscosité Brookfield déterminée à 20° C à la vitesse de 780 tr/min de 2600 mPa.s.

Le rapport pondéral acrylate de butyle/acrylate d'hydroxy-2 éthyle est de 4.

Dans ce mélange on introduit à la température ambiante, sous agitation, 4 g de peroxyde de benzoyle à 75 % dans l'eau, puis le milieu réactionnel est chauffé progressivement à 65° C sous pression réduite, jusqu'à fin de polymérisation, ce qui demande 30 minutes. Après refroidissement à la température ambiante, on obtient une masse solide luminescente présentant une densité homogène de pigments.

### EXEMPLE 4

On mélange à la température ambiante, sous agitation :
- 16,7 g de HIGHLINK OG 100^{R} défini précédemment,
- 11,7 g de méthacrylate de n-butyle,
- 19,0 g de LUMILUX^{R}, Green Mix, référence 50085.

Puis, dans ce mélange, on introduit sous agitation, à la température ambiante, 0,18 g d'azobisisobutyronitrile et ensuite cette solution est chauffée progressivement à 35° C. A cette température la réaction de polymérisation démarre et elle est entièrement terminée en 10 minutes. Après refroidissement à la température ambiante, on obtient une masse solide luminescente exempte de bulle ou de craquelure et présentant une densité homogène de pigments luminescents.

## Revendications

1. Composition fluide luminescente polymérisable, caractérisée par le fait qu'elle contient pondéralement (a) de 30 à 45 % d'un ou plusieurs pigments minéraux luminescents, (b) de 10 à 30 % de particules de silice, d'un diamètre compris entre 7 et 1000 nm, non liées entre elles par des liaisons siloxane, et (c) le complément à 100 % par de l'acrylate d'hydroxy-2 éthyle et/ou du méthacrylate d'hydroxy-2 éthyle.

2. Composition selon la revendication 1, caractérisée par le fait que les particules de silice contiennent au moins un groupement silanol superficiel par nm² estérifié par un acrylate ou méthacrylate d'hydroxy-2 éthyle.

3. Composition selon l'une quelconque des revendications 1 et 2, caractérisée par le fait que les particules de silice ont un diamètre compris entre 7 et 100 nm.

4. Composition selon l'une quelconque des revendications 1 à 3, caractérisée par le fait qu'elle contient pondéralement (a) de 30 à 45 % d'un ou plusieurs pigments minéraux luminescents, (b) de 10 à 30 % de particules de silice, d'un diamètre compris entre 7 et 100 nm, non liées entre elles par des liaisons siloxane, et (c) le complément à 100 % par de l'acrylate d'hydroxy-2 éthyle et/ou du méthacrylate d'hydroxy-2 éthyle.

5. Composition selon l'une quelconque des revendications 1 à 4, caractérisée par le fait qu'elle contient en outre un ou plusieurs (méth)acrylates d'alkyle en C₁-C₄ dans un rapport pondéral (méth)acrylate d'alkyle en C₁-C₄ sur (méth)acrylate d'hydroxy-2 éthyle compris entre 0 et 6.

6. Composition selon l'une quelconque des revendications 1 à 4, caractérisée par le fait qu'elle contient en outre un ou plusieurs (méth)acrylates d'hydroxyalkyle en C₃-C₅ dans un rapport pondéral (méth)acrylate d'hydroxyalkyle en C₃-C₅ sur (méth)acrylate d'hydroxy-2 éthyle compris entre 0 et 6.

7. Composition selon l'une quelconque des revendications 1 à 4, caractérisée par le fait qu'elle contient en outre un mélange en proportions variables, M, d'un ou plusieurs (méth)acrylates d'alkyle en C₁-C₄ et d'un ou plusieurs (méth)acrylates d'hydroxyalkyle en C₃-C₅ dans un rapport pondéral M sur (méth)acrylate d'hydroxy-2 éthyle compris entre 0 et 6.

8. Application d'une composition selon l'une quelconque des revendications 1 à 7 à l'obtention de masses solides luminescentes.

## Patentansprüche

1. Flüssige lumineszierende, polymerisierbare Zusammensetzung, dadurch gekennzeichnet, daß sie gewichtsmäßig (a) 30 bis 45% eines oder mehrerer lumineszierender mineralischer Pigmente, (b) 10 bis 30% Kieselsäureteilchen eines Durchmessers von zwischen 7 und 1000 nm, die untereinander nicht über Siloxanbindungen verbrückt sind, und (c) die Differenz auf 100% an 2-Hydroxyethylacrylat und/oder 2-Hydroxyethylmethacrylat enthält.

2. Zusammensetzung nach Anspruch 1, dadurch gekennzeichnet, daß die Kieselsäureteilchen pro nm² mindestens eine oberflächliche Silanolgruppe enthalten, die mit einem 2-Hydroxyethylacrylat oder -methycrylat verestert ist.

3. Zusammensetzung nach Anspruch 1 oder 2, dadurch gekennzeichnet, daß die Kieselsäureteilchen einen Durchmesser von zwischen 7 und 100 nm aufweisen.

4. Zusammensetzung nach einem der Ansprüche 1 bis 3, dadurch gekennzeichnet, daß sie gewichtsmäßig (a) 30 bis 45% eines oder mehrerer lumineszierender mineralischer Pigmente, (b) 10 bis 30% Kieselsäureteilchen eines Durchmessers von zwischen 7 und 100 nm, die untereinander nicht über Siloxanbindungen verbrückt sind, und (c) die Differenz auf 100% an 2-Hydroxyethylacrylat und/oder 2-Hydroxyethylmethacrylat enthalten.

5. Zusammensetzung nach einem der Ansprüche 1 bis 4, dadurch gekennzeichnet, daß sie außerdem ein oder mehrere C₁-C₄-Alkyl(meth)acrylate in einem Gewichtsverhältnis C₁-C₄-Alkyl(meth)acrylat zu 2-Hydroxyethyl(meth)acrylat von zwischen 0 und 6 enthält.

6. Zusammensetzung nach einem der Ansprüche 1 bis 4, dadurch gekennzeichnet, daß sie außerdem ein oder mehrere C₃-C₅-Hydroxyalkyl(meth)acrylate in einem Gewichtsverhältnis C₃-C₅-Hydroxyalkyl(meth)acrylat zu 2-Hydroxyethyl(meth)acrylat von zwischen 0 und 6 enthält.

7. Zusammensetzung nach einem der Ansprüche 1 bis 4, dadurch gekennzeichnet, daß sie außerdem eine Mischung M mit variablen Anteilen eines oder mehrerer C₁-C₄-Alkyl(meth)acrylate und eines oder mehrerer C₃-C₅-Hydroxyalkyl(meth)acrylate in einem Gewichtsverhältnis M zu 2-Hydroxyethyl(meth)acrylat von zwischen 0 und 6 enthält.

8. Verwendung einer Zusammensetzung nach einem der Ansprüche 1 bis 7, zum Erhalt fester lumineszierender Massen.

## Claims

1. Polymerizable luminescent fluid composition, characterized by the fact that it contains by weight (a) 30 to 45% of one or more luminescent mineral pigments, (b) 10 to 30% of silica particles, having a diameter comprised between 7 and 1000 nm, not linked to each other by siloxane bonds, and (c) the complement to 100% of 2-hydroxy ethyl acrylate and/or 2-hydroxy ethyl methacrylate.

2. Composition according to claim 1, characterized by the fact that the silica particles contain at least one surface silanol group per nm² esterified by a 2-hydroxy ethyl acrylate or methacrylate.

3. Composition according to any one of claims 1 and 2, characterized by the fact that the silica particles have a diameter comprised between 7 and 100 nm.

4. Composition according to any one of claims 1 to 3, characterized by the fact that it contains by weight (a) 30 to 45% of one or more luminescent mineral pigments, (b) 10 to 30% of silica particles, having a diameter comprised between 7 and 100 nm, not linked to each other by siloxane bonds, and (c) the complement to 100% of 2-hydroxy ethyl acrylate and/or 2-hydroxy ethyl methacrylate.

5. Composition according to any one of claims 1 to 4, characterized by the fact that it contains in addition one or more C₁-C₄ alkyl (meth)acrylates in a ratio by weight of C₁-C₄ alkyl (meth)acrylate to 2-hydroxy ethyl (meth)acrylate comprised between 0 and 6.

6. Composition according to any one of claims 1 to 4, characterized by the fact that they contain in addition one or more C₃-C₅ hydroxyalkyl (meth)acrylates in a ratio by weight of C₃-C₅ hydroxyalkyl (meth)acrylate to 2-hydroxy ethyl (meth)acrylate comprised between 0 and 6.

7. Composition according to any one of claims 1 to 4, characterized by the fact that it contains in addition a mixture in variable proportions, M, of one or more C₁-C₄ alkyl (methy)acrylates and one or more C₃-C₅ hydroxyalkyl (meth)acrylates in a ratio by weight of M to 2-hydroxy ethyl (meth)acrylate comprised between 0 and 6.

8. Use of a composition according to any one of claims 1 to 7 for obtaining luminescent solid compounds.
